# EUROPÄISCHE PATENTSCHRIFT

(11) **EP 2 845 769 B1**
(45) Veröffentlichungstag und Bekanntmachung des Hinweises auf die Patenterteilung: **28.02.2018**
(21) Anmeldenummer: 14001932.4
(22) Anmeldetag: 04.06.2014
(51) Int. Cl.: B60R 9/06, B60R 5/04

(54) **FAHRZEUGKOFFER UND ZUGEHÖRIGES VERFAHREN**
VEHICLE LUGGAGE AND ASSOCIATED METHOD
COFFRE DE VÉHICULE ET PROCÉDÉ ASSOCIÉ

(30) Priorität: 05.09.2013 DE 102013014865
(43) Veröffentlichungstag der Anmeldung: 11.03.2015
(73) Patentinhaber: MAN Truck & Bus AG, 80995 München (DE)
(72) Erfinder: Elsner, Thomas, 83278 Traunstein (DE)
(74) Vertreter: v. Bezold & Partner Patentanwälte - PartG mbB

(56) Entgegenhaltungen:
- WO-A2-2007/092336
- FR-A3- 2 931 754
- GB-A- 2 285 785
- US-A- 5 029 740
- US-A1- 2009 152 314
- US-A1- 2010 040 452

## Beschreibung

Die Erfindung betrifft einen Fahrzeugkoffer zur Außenmontage an einem Fahrzeug, insbesondere zur Außenmontage an einem Heck eines Omnibusses. Weiterhin umfasst die Erfindung ein entsprechendes Verfahren zur Montage bzw. Demontage eines solchen Fahrzeugkoffers.

Aus dem Stand der Technik sind Fahrzeugkoffer bekannt, die zur Erweiterung des Gepäckraumes eines Omnibusses dienen und üblicherweise außen am Heck eines Omnibusses montiert werden können. Zur Montage bzw. Demontage eines solchen Fahrzeugkoffers sind aus dem Stand der Technik verschiedene Möglichkeiten bekannt.

Eine Möglichkeit sieht vor, dass der beladene Fahrzeugkoffer bei der Montage von mehreren Bedienungspersonen manuell angehoben und dann im angehobenen Zustand an einer entsprechenden Aufhängung an dem Heck des Omnibusses montiert wird. Bei der Demontage des Fahrzeugkoffers wird der beladene Fahrzeugkoffer dann von der Aufhängung am Heck des Omnibusses gelöst und von mehreren Bedienungspersonen manuell auf den Untergrund abgesenkt.

Nachteilig an dieser Möglichkeit zur Montage bzw. Demontage eines Fahrzeugkoffers ist zunächst die Tatsache, dass mehrere Bedienungspersonen erforderlich sind, um den Koffer zu montieren bzw. zu demontieren. Ein weiterer Nachteil dieser Möglichkeit zur Montage bzw. Demontage ist das begrenzte Gesamtgewicht des Fahrzeugkoffers, da Fahrzeugkoffer oberhalb eines bestimmten Gewichts auch von mehreren Bedienungspersonen nicht mehr angehoben bzw. abgesenkt werden können.

Eine andere Möglichkeit zur Montage bzw. Demontage eines solchen Fahrzeugkoffers ist aus DE 86 33 926 U1 bekannt. Hierbei weist der Fahrzeugkoffer an seiner Unterseite einen ausfahrbaren Ständer auf, der im ausgefahrenen Zustand verriegelt werden kann. Zur Demontage des Fahrzeugkoffers wird zunächst der Ständer ausgefahren und im ausgefahrenen Zustand verriegelt. Anschließend wird dann die Verbindung zwischen dem Fahrzeugkoffer und der Aufhängung am Heck des Omnibusses gelöst. Hierbei ist vorgesehen, den kompletten Omnibus durch Verwendung der Niveauregulierung abzusenken und somit vom Fahrzeugkoffer zu lösen. Die Befestigungselemente bestehen somit nicht aus drei Teilen (zwei Ösen und ein Zapfen), sondern nur aus zwei Teilen (z.B. ein starrer Zapfen und eine Öse). Wichtig ist hierbei zu erwähnen, dass der Fahrzeugkoffer nach dem Ausfahren des Ständers in der Höhe nicht mehr bewegt wird. Schließlich kann der Fahrzeugkoffer dann auf dem Ständer mit mehreren Rollen verschoben werden. Zur Montage des Fahrzeugkoffers an dem Heck des Omnibusses wird der Fahrzeugkoffer dann auf dem Ständer an das Heck des Omnibusses herangerollt, um den Fahrzeugkoffer dann an der entsprechenden Aufhängung am Heck des Omnibusses befestigen zu können. Schließlich wird dann der Ständer wieder in den Fahrzeugkoffer eingezogen, woraufhin die Montage des Fahrzeugkoffers beendet ist.

Nachteilig an dieser Möglichkeit zur Montage bzw. Demontage des Fahrzeugkoffers ist der hohe Schwerpunkt des Fahrzeugkoffers im demontierten Zustand, da der Ständer am demontierten Fahrzeugkoffer ausgefahren bleibt.

Aus US 2009/0152314 A1 ist ein Fahrzeugkoffer gemäß dem Oberbegriff des Anspruchs 1 und ein entsprechendes Betriebsverfahren gemäß dem Oberbegriff von Anspruch 11 bekannt. Der Fahrzeugkoffer kann hierbei zur Montage bzw. Demontage an einem Fahrzeug von einer Hubeinrichtung angehoben bzw. abgesenkt werden. Die Hubeinrichtung wird hierbei manuell oder durch einen nicht näher spezifizierten Motor angetrieben. Nachteilig an diesem bekannten Fahrzeugkoffer ist deshalb der unbefriedigende Antrieb der Hubeinrichtung.

Schließlich ist zum technischen Hintergrund der Erfindung noch hinzuweisen auf FR 2 931 754 A3, GB 2 285 785 A, US 2010/040452 A1, WO 2007/092336 A2 und US 5 029 740 A.

Der Erfindung liegt deshalb die Aufgabe zugrunde, einen entsprechend verbesserten Fahrzeugkoffer und ein entsprechend verbessertes Verfahren zur Montage bzw. Demontage eines solchen Fahrzeugkoffers zu schaffen.

Diese Aufgabe wird durch einen erfindungsgemäßen Fahrzeugkoffer bzw. durch ein entsprechendes Verfahren gemäß den unabhängigen Ansprüchen gelöst.

Die Erfindung sieht eine Hubeinrichtung zum Anheben bzw. Absenken des Fahrzeugkoffers vor. Zum einen ermöglicht die Hubeinrichtung ein Anheben des Fahrzeugkoffers für die Außenmontage des Fahrzeugkoffers an dem Fahrzeug, wobei der Fahrzeugkoffer vorzugsweise vom Untergrund auf eine Montagehöhe angehoben wird. Zum anderen ermöglicht die Hubeinrichtung aber auch ein Absenken des Fahrzeugkoffers bei der Demontage des Fahrzeugkoffers, wobei der Fahrzeugkoffer von der Montagehöhe auf den Untergrund abgesenkt wird.

Gemäß der Erfindung ist die Hubeinrichtung in den Fahrzeugkoffer integriert, so dass an dem zugehörigen Fahrzeug (z.B. Omnibus) keine Hubeinrichtung erforderlich ist.

In dem bevorzugten Ausführungsbeispiel der Erfindung greift die Hubeinrichtung einerseits an dem Fahrzeug und andererseits an dem Fahrzeugkoffer an. Hierbei verfügt die Hubeinrichtung über eine Montagehalterung, die im montierten Zustand an einer entsprechenden Aufhängung an der Außenseite des Fahrzeugs montiert ist. Die Montagehalterung ist hierbei relativ zu dem Fahrzeugkoffer nach oben ausfahrbar und nach unten einfahrbar. Zum Anheben des Fahrzeugkoffers fährt die Hubeinrichtung die Montagehalterung nach unten ein, so dass der Fahrzeugkoffer dann entsprechend angehoben wird. Zum Absenken des Fahrzeugkoffers wird die Montagehalterung dagegen von der Hubeinrichtung nach oben ausgefahren, so dass der Fahrzeugkoffer entsprechend abgesenkt wird.

Bei diesem bevorzugten Ausführungsbeispiel befindet sich an der Unterseite des Fahrzeugkoffers vorzugsweise ein Ständer, um den Fahrzeugkoffer auf einem Untergrund abzustellen. Der Ständer kann hierbei im Gegensatz zu dem eingangs beschriebenen Stand der Technik gemäß DE 86 33 926 U1 fest an dem Fahrzeugkoffer angebracht sein und ermöglicht somit keine Überbrückung zwischen der Montagehöhe des Fahrzeugkoffers und dem Untergrund. Darüber hinaus muss der Ständer den Fahrzeugkoffer nicht anheben oder absenken, sondern dient lediglich für eine Standsicherheit des abgesenkten Fahrzeugkoffers auf einem Untergrund.

In einem anderen Ausführungsbeispiel der Erfindung stützt sich die Hubeinrichtung dagegen einerseits an dem Untergrund und andererseits an dem Fahrzeugkoffer ab, um den Fahrzeugkoffer anzuheben bzw. abzusenken. In diesem Ausführungsbeispiel weist die Hubeinrichtung einen Ständer auf, um den Fahrzeugkoffer auf einem Untergrund abzustellen. Der Ständer ist hierbei relativ zu dem Fahrzeugkoffer nach unten ausfahrbar und nach oben einfahrbar. Zum Anheben des Fahrzeugkoffers fährt die Hubeinrichtung den Ständer hierbei relativ zu dem Fahrzeugkoffer nach unten aus, während sich der Ständer an dem Untergrund abstützt und den Fahrzeugkoffer dadurch anhebt. Zum Absenken des Fahrzeugkoffers fährt die Hubeinrichtung den Ständer dagegen relativ zu dem Fahrzeugkoffer nach oben ein, während sich der Ständer an dem Untergrund abstützt, wodurch der Fahrzeugkoffer abgesenkt wird.

Auch in diesem Ausführungsbeispiel der Erfindung mit einem Ständer zum Anheben bzw. Absenken des Fahrzeugkoffers weist der Fahrzeugkoffer vorzugsweise eine Montagehalterung auf, die im montierten Zustand an einer entsprechenden Aufhängung an der Außenseite des Fahrzeugs montiert ist, wobei die Montagehalterung in diesem Ausführungsbeispiel an dem Fahrzeugkoffer fest angebracht sein kann und nicht ausfahrbar sein muss.

Gemäß der Erfindung weist die Hubeinrichtung mindestens einen pneumatischen Antriebszylinder auf, um den Fahrzeugkoffer anzuheben bzw. abzusenken. Besonders vorteilhaft ist hierbei die Verwendung eines pneumatisehen Antriebszylinders, da die Druckluftbremsanlage eines Omnibusses ohnehin einen Druckluftanschluss aufweist, der auch zum Antrieb des pneumatischen Antriebszylinders verwendet werden kann. Erfindungsgemäss weist der Antriebszylinder einen Druckluftanschluss auf, der mit einem Druckluftanschluss des Fahrzeugs koppelbar ist. In einer Variante der Erfindung ist der Antriebszylinder innerhalb des Fahrzeugkoffers angeordnet. Dies ist insbesondere dann sinnvoll, weil der Fahrzeugkoffer durch einen einfahrbaren und ausfahrbaren Ständer angehoben bzw, abgesenkt wird.

In einer anderen Erfindungsvariante ist der Antriebszylinder dagegen an der Außenseite des Fahrzeugkoffers angebracht, d.h. außerhalb des Gepäckaufnahmevolumens des Fahrzeugkoffers. Dies ist vorteilhaft, weil das Gepäckaufnahmevolumen des Fahrzeugkoffers dann durch den Antriebszylinder nicht eingeschränkt wird.

In jedem Fall weist der Fahrzeugkoffer einen Ständer auf, um den Fahrzeugkoffer auf einem Untergrund abstellen zu können. Vorzugsweise umfasst der Ständer mindestens drei Rollen, um den Fahrzeugkoffer kippsicher und verfahrbar auf dem Untergrund abzustellen und zu verfahren. Zur Erreichung einer Kippsicherheit sind die Rollen nicht in einer Linie angeordnet, sondern bilden eine ausreichend große Aufstandsfläche. Darüber hinaus ist es vorteilhaft, wenn die Rollen keine festen Rollachsen aufweisen, sondern mit ihren Rollachsen um die Vertikale schwenkbar sind, um ihre Rollrichtung entsprechend verändern zu können.

In einem bevorzugten Ausführungsbeispiel der Erfindung sind die Rollen an der Unterseite des Fahrzeugkoffers in mindestens einem Rollenstaufach angeordnet, wobei die Rollen wahlweise in das Rollenstaufach eingefahren oder aus dem Rollenstaufach herausgefahren werden können. Hierbei besteht auch die Möglichkeit, dass das Rollenstaufach durch einen Verschluss verschließbar ist, beispielsweise durch einen Rollladenverschluss oder einen Schiebeverschluss.

Es wurde bereits vorstehend erwähnt, dass der Fahrzeugkoffer an einer entsprechenden Aufhängung an dem Fahrzeug (z.B. Omnibus) befestigt werden kann. Hierzu weist der Fahrzeugkoffer mindestens ein Befestigungselement auf, das an einem komplementären Befestigungselement an dem Fahrzeug befestigt werden kann. Hierzu ist eine Relativpositionierung zwischen den beiden komplementären Befestigungselementen erforderlich, wobei die Erreichung der erforderlichen Relativposition in der Praxis aufgrund der großen Masse des Fahrzeugkoffers schwierig sein kann. Zur Erleichterung der Relativpositionierung besteht deshalb die Möglichkeit, dass das Befestigungselement an dem Fahrzeugkoffer mit einem Einführtrichter versehen ist, in den das komplementäre Befestigungselement an dem Fahrzeug eingeführt wird. Zur Herstellung der mechanischen Verbindung zwischen den komplementären Befestigungselementen an dem Fahrzeugkoffer einerseits und an dem Fahrzeug andererseits ist also zunächst nur eine relativ grobe Relativpositionierung erforderlich, um das Befestigungselement an dem Fahrzeug in den Einführtrichter einzuführen. Dadurch wird die Montage des Fahrzeugkoffers an dem Fahrzeug wesentlich vereinfacht.

Weiterhin ist zu erwähnen, dass die Erfindung nicht nur Schutz beansprucht für den vorstehend beschriebenen erfindungsgemäßen Fahrzeugkoffer allein. Vielmehr beansprucht die Erfindung auch Schutz für ein entsprechend ausgestattetes Fahrzeug (z.B. Omnibus) mit einem solchen Fahrzeugkoffer, wobei der Fahrzeugkoffer beispielsweise an der Außenseite des Omnibusses am Heck montiert sein kann.

Schließlich beansprucht die Erfindung auch Schutz für ein Verfahren zur Montage bzw. Demontage eines solchen Fahrzeugkoffers an einer Außenseite eines Fahrzeuges, beispielsweise an einem Heck eines Omnibusses.

Zur Montage des Fahrzeugkoffers wird der Fahrzeugkoffer hierbei vom Untergrund in eine Montagehöhe angehoben und dann an der Außenseite des Fahrzeugs an einer entsprechenden Aufhängung befestigt.

Zur Demontage des Fahrzeugkoffers wird der Fahrzeugkoffer dagegen zunächst auf dem Untergrund abgestützt, nämlich durch Ausfahren des Ständers nach unten auf den Untergrund. Anschließend kann der Fahrzeugkoffer dann von der Aufhängung an der Außenseite des Fahrzeugs gelöst werden. Bei dem ausfahrbaren Ständer kann der Fahrzeugkoffer dann auf dem Ständer stehend nach unten abgesenkt werden.

Das erfindungsgemäße Verfahren zeichnet sich nun dadurch aus, dass das Anheben bzw. Absenken des Fahrzeugkoffers nicht - wie beim Stand der Technik - manuell erfolgt, sondern mittels einer Hubeinrichtung maschinell durchgeführt wird.

Andere vorteilhafte Weiterbildungen der Erfindung sind in den Unteransprüchen gekennzeichnet oder werden nachstehend zusammen mit der Beschreibung der bevorzugten Ausführungsbeispiele anhand der Figuren näher erläutert. Es zeigen:
- Figur 1: eine Perspektivansicht eines Omnibusses mit einem nicht erfindungsgemäßen Fahrzeugkoffer im demontierten Zustand,
- Figur 2: eine Perspektivansicht des Omnibusses aus Figur 1 mit dem Fahrzeugkoffer aus Figur 1, wobei der Fahrzeugkoffer an dem Omnibus montiert, aber abgesenkt ist,
- Figur 3: eine Perspektivansicht des Omnibusses und des Fahrzeugkoffers aus den Figuren 1 und 2, wobei der Fahrzeugkoffer an dem Omnibus montiert und angehoben ist,
- Figur 4A: eine Perspektivansicht auf den Fahrzeugkoffer mit einer ausgefahrenen Montagehalterung,
- Figur 4B: eine Perspektivansicht gemäß Figur 4A mit einer eingefahrenen Montagehalterung,
- Figur 5: eine Perspektivansicht auf zwei komplementäre Befestigungselemente an dem Fahrzeugkoffer einerseits und an dem Omnibus andererseits,
- Figur 6A: eine Abwandlung von Figur 5 mit einem zusätzlichen Einführtrichter zur Erleichterung der Montage,
- Figur 6B: eine perspektivische Aufsicht auf das Ausführungsbeispiel gemäß Figur 6A,
- Figur 7A: eine perspektivische Unteransicht auf den Fahrzeugkoffer mit einem geöffneten Rollenstaufach,
- Figur 7B: die perspektivische Unteransicht aus Figur 7A mit geschlossenen Rollenstaufächern.

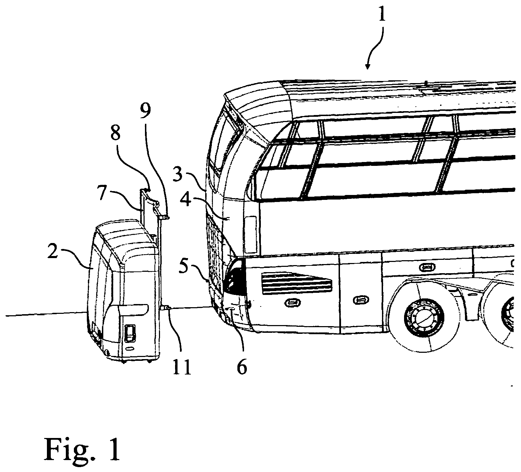

Die Figuren 1-3 zeigen verschiedene Perspektivansichten eines Omnibusses 1 mit einem Fahrzeugkoffer 2, der am Heck des Omnibusses 1 an einer entsprechenden Aufhängung montiert werden kann, um das Gepäckraumvolumen des Omnibusses 1 zu erweitern. Hierzu weist der Omnibus 1 an seinem Heck außen mehrere Befestigungselemente 3, 4, 5, 6 auf, die eine Vierpunkt-Montage des Fahrzeugkoffers 2 an dem Omnibus 1 ermöglichen, was an sich aus dem Stand der Technik bekannt ist.

Der Fahrzeugkoffer 2 weist eine entsprechende Montagehalterung 7 mit komplementären Befestigungselementen 8, 9, 10, 11 auf, wobei die Befestigungselemente 3-6 am Heck des Omnibusses 1 jeweils paarweise mit den komplementären Befestigungselementen 8-11 der Montagehalterung 7 verbunden werden können.

Darüber hinaus weist der Fahrzeugkoffer 2 an seiner Unterseite mehrere Rollen 12 auf, um den Fahrzeugkoffer 2 auf einem Untergrund 13 (z.B. Straße) kippsicher absetzen und verfahren zu können.

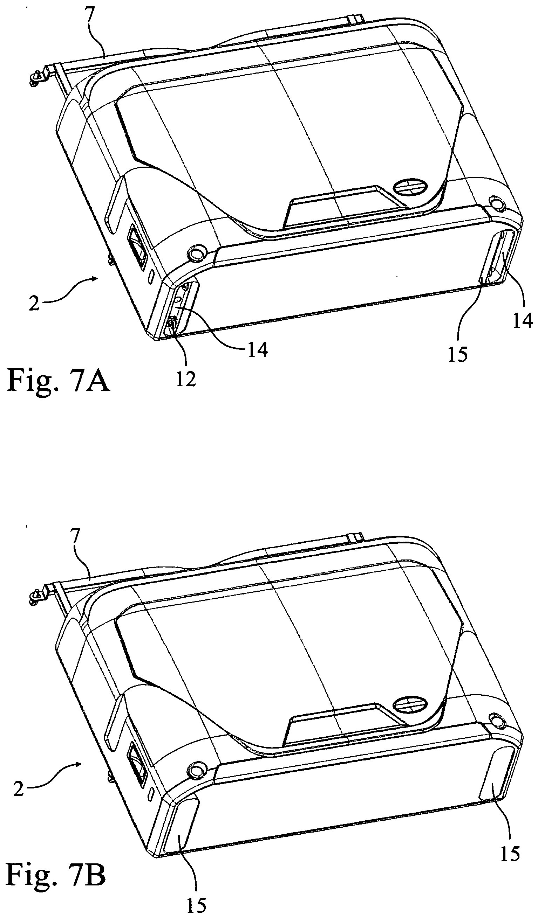

Die Rollen 12 sind hierbei an der Unterseite des Fahrzeugkoffers 2 jeweils paarweise in einem Rollenstaufach 14 untergebracht, wie aus den Figuren 7A und 7B ersichtlich ist. Im montierten Zustand des Fahrzeugkoffers 2 während der Fahrt des Omnibusses 1 sind die Rollen 12 in die Rollenstaufächer 14 eingefahren, wobei die Rollenstaufächer 14 dann durch einen Verschluss 15 (z.B. Rollladenverschluss oder Schiebeverschluss) verschlossen sind, wie aus Figur 7B ersichtlich ist.

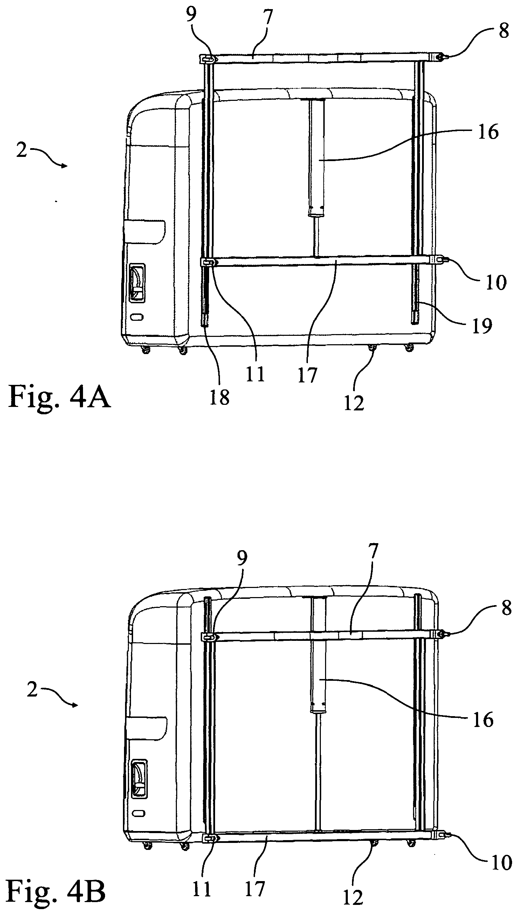

Darüber hinaus weist der Fahrzeugkoffer eine integrierte Hubeinrichtung auf, um den Fahrzeugkoffer 2 bei der Montage an dem Omnibus 1 anzuheben bzw. bei der Demontage von dem Omnibus 1 abzusenken. Die Hubeinrichtung besteht im Wesentlichen aus einem pneumatischen Antriebszylinder 16, der sich mit seinem oberen Ende an dem Fahrzeugkoffer 2 abstützt, wie aus den Figuren 4A und 4B ersichtlich ist. An seinem unteren Ende stützt sich der pneumatische Antriebszylinder 16 dagegen an einer Querstrebe 17 der Montagehalterung 7 ab. Beim Einfahren des pneumatischen Antriebszylinders 16 wird die Montagehalterung 7 also relativ zu dem Fahrzeugkoffer 2 nach oben ausgefahren, wie aus Figur 4A ersichtlich ist. Beim Ausfahren des pneumatischen Antriebszylinders 16 wird die Montagehalterung 7 dagegen relativ zu dem Fahrzeugkoffer 2 eingefahren, wie aus Figur 4B ersichtlich ist. Hierbei ist zu erwähnen, dass die Montagehalterung 7 an zwei parallelen und vertikal verlaufenden Schienen 18, 19 an dem Fahrzeugkoffer 2 nach oben bzw. unten verfahrbar ist.

Figur 1 zeigt einen demontierten Zustand des Fahrzeugkoffers 2, wobei die Montagehalterung 7 bereits nach oben ausgefahren ist.

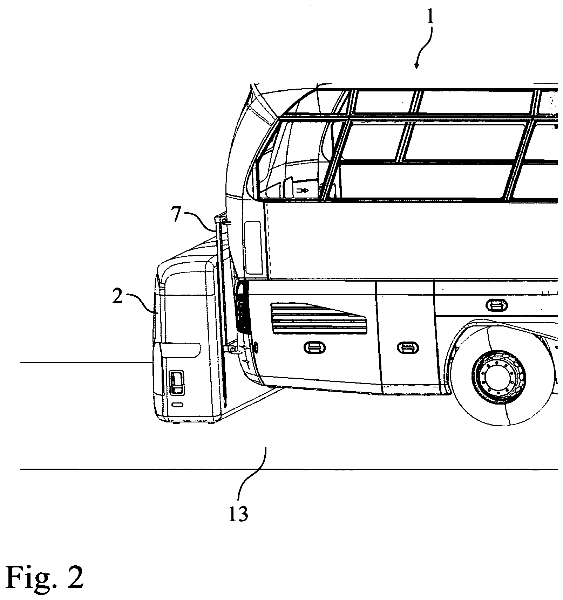

Anschließend wird der Fahrzeugkoffer 2 dann auf den Rollen 12 an das Heck des Omnibusses 1 herangefahren, woraufhin dann eine mechanische Verbindung hergestellt werden kann zwischen den Befestigungselementen 3-6 am Heck des Omnibusses 1 einerseits und den Befestigungselementen 8-11 der Montagehalterung 7 andererseits, wie in Figur 2 dargestellt ist.

Darauf hin wird dann eine Druckluftverbindung hergestellt zwischen dem Antriebszylinder 16 und der Druckluftversorgung des Omnibusses 1.

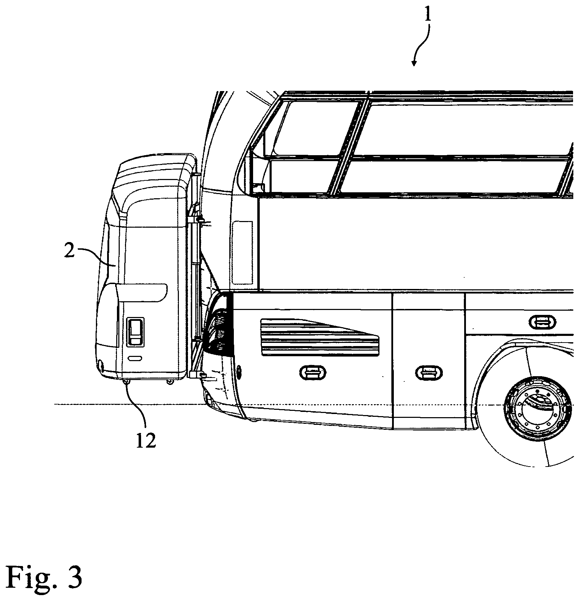

In einem nächsten Schritt wird der Antriebszylinder 16 dann ausgefahren, um die Montagehalterung 7 relativ zu dem Fahrzeugkoffer 2 in die in Figur 4B dargestellte Stellung zu bewegen. Bei diesem Ausfahren des Antriebszylinders 16 wird der Fahrzeugkoffer 2 von dem Untergrund 13 in die in Figur 3 dargestellte Montagehöhe angehoben und dann verriegelt. Daraufhin kann der Omnibus 1 dann mit dem Fahrzeugkoffer 2 losfahren.

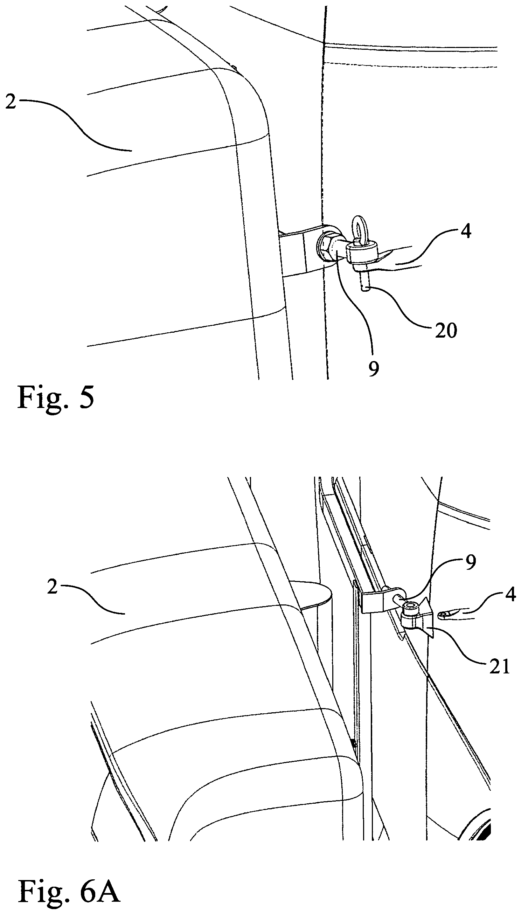

Figur 5 zeigt eine Perspektivansicht eines Ausführungsbeispiels der komplementären Befestigungselemente 4, 9 mit zwei Ösen, die koaxial zueinander ausgerichtet und dann mittels eines Bolzens 20 verbunden werden. Zum Einführen des Bolzens 20 müssen die komplementären Befestigungselemente 4, 9 relativ zueinander sehr genau ausgerichtet werden, was schwierig sein kann.

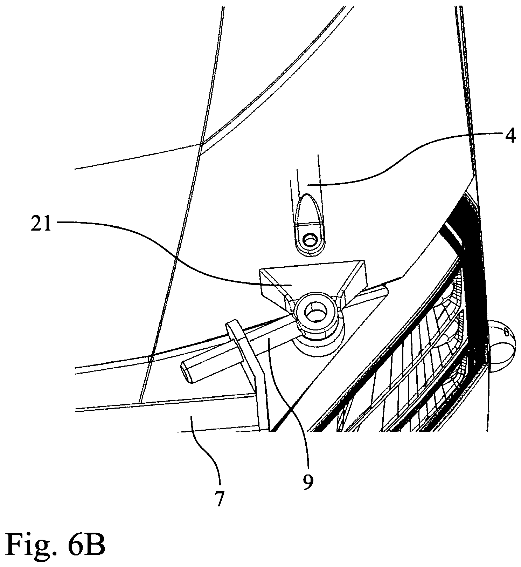

Die Figuren 6A und 6B zeigen deshalb ein verbessertes Ausführungsbeispiel, wobei an dem Befestigungselement 9 und auch an den anderen Befestigungselementen 8, 10, 11 der Montagehalterung 7 jeweils ein Einführtrichter 21 angebracht ist, wobei der Einführtrichter 21 die Relativpositionierung der komplementären Befestigungselemente 3-7 bzw. 8-11 erleichtert.

Die Erfindung ist nicht auf das vorstehend beschriebene bevorzugte Ausführungsbeispiel beschränkt. Vielmehr ist eine Vielzahl von Varianten und Ausführungsbeispielen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen oder nur mit einem Teil der Merkmale der in Bezug genommenen Ansprüche und insbesondere des Hauptanspruchs.

## Patentansprüche

1. Fahrzeugkoffer (2) zur Außenmontage an einem Fahrzeug (1), insbesondere zur Außenmontage an einem Heck eines Omnibusses (1), mit
a) einer Hubeinrichtung (16) zum Anheben des Fahrzeugkoffers (2) für die Außenmontage des Fahrzeugkoffers (2) an dem Fahrzeug (1) und/oder zum Absenken des Fahrzeugkoffers (2) im Rahmen der Demontage des Fahrzeugkoffers (2) von dem Fahrzeug (1), wobei die Hubeinrichtung (16) in den Fahrzeugkoffer (2) integriert ist,
**dadurch gekennzeichnet,**
b) dass die Hubeinrichtung (7, 16) mindestens einen pneumatischen Antriebszylinder (16) aufweist, und
c) dass der Antriebszylinder (16) einen Druckluftanschluss aufweist, der mit einem Druckluftanschluss des Fahrzeugs (1) koppelbar ist.

2. Fahrzeugkoffer (2) nach Anspruch 1, **dadurch gekennzeichnet,**
a) **dass** die Hubeinrichtung (7, 16) eine Montagehalterung (7) aufweist, die im montierten Zustand an einer entsprechenden Aufhängung (3-6) an der Außenseite des Fahrzeugs (1) montiert ist,
b) **dass** die Montagehalterung (7) relativ zu dem Fahrzeugkoffer (2) nach oben ausfahrbar und nach unten einfahrbar ist,
c) **dass** die Hubeinrichtung (7, 16) die Montagehalterung (7) zum Anheben des Fahrzeugkoffers (2) relativ zu dem Fahrzeugkoffer (2) nach unten einfährt, und
d) **dass** die Hubeinrichtung (16) die Montagehalterung (7) zum Absenken des Fahrzeugkoffers (2) relativ zu dem Fahrzeugkoffer (2) nach oben ausfährt.

3. Fahrzeugkoffer (2) nach Anspruch 1, **gekennzeichnet durch** einen Ständer (12), um den Fahrzeugkoffer (2) auf einem Untergrund (13) abzustellen, wobei der Ständer (12) an dem Fahrzeugkoffer (2) fest angebracht ist und kein Anheben des Fahrzeugkoffers (2) erlaubt.

4. Fahrzeugkoffer nach Anspruch 1, **dadurch gekennzeichnet,**
a) **dass** die Hubeinrichtung einen Ständer aufweist, um den Fahrzeugkoffer auf einem Untergrund abzustellen,
b) **dass** der Ständer relativ zu dem Fahrzeugkoffer nach unten ausfahrbar und nach oben einfahrbar ist,
c) **dass** die Hubeinrichtung den Ständer zum Anheben des Fahrzeugkoffers relativ zu dem Fahrzeugkoffer nach unten ausfährt, während sich der Ständer an dem Untergrund abstützt und den Fahrzeugkoffer anhebt, und
d) **dass** die Hubeinrichtung den Ständer zum Absenken des Fahrzeugkoffers relativ zu dem Fahrzeugkoffer nach oben einfährt, während sich der Ständer an dem Untergrund abstützt.

5. Fahrzeugkoffer nach Anspruch 4, **gekennzeichnet durch** eine Montagehalterung, die im montierten Zustand an einer entsprechenden Aufhängung an der Außenseite des Fahrzeugs montiert ist, wobei die Montagehalterung an dem Fahrzeugkoffer fest angebracht und nicht ausfahrbar ist.

6. Fahrzeugkoffer (2) nach einem der vorhergehenden Ansprüche, **dadurch gekennzeichnet,**
a) **dass** der Antriebszylinder (16) innerhalb des Fahrzeugkoffers (2) angeordnet ist, insbesondere zum Einfahren und Ausfahren des Ständers, oder
b) **dass** der Antriebszylinder (16) an der Außenseite des Fahrzeugkoffers (2) angebracht ist, insbesondere zum Einfahren und Ausfahren der Montagehalterung (7).

7. Fahrzeugkoffer (2) nach einem der Ansprüche 3 bis 6,
**dadurch gekennzeichnet,**
a) **dass** der Ständer (12) mindestens drei Rollen (12) aufweist, um den Fahrzeugkoffer (2) kippsicher und verfahrbar auf dem Untergrund (13) abzustellen und zu verfahren, und/oder
b) **dass** die Rollen (12) des Ständers um die Vertikale schwenkbar sind.

8. Fahrzeugkoffer (2) nach Anspruch 7, **dadurch gekennzeichnet,**
a) **dass** die Rollen (12) an der Unterseite des Fahrzeugkoffers (2) in mindestens einem Rollenstaufach (14) angeordnet sind, und/oder
b) **dass** die Rollen (12) wahlweise in das Rollenstaufach (14) eingefahren oder aus dem Rollenstaufach (14) herausgefahren werden können, und/oder
c) **dass** das Rollenstaufach (14) durch einen Verschluss (15) verschließbar ist, insbesondere durch einen Rollladenverschluss oder einen Schiebeverschluss.

9. Fahrzeugkoffer (2) nach einem der vorhergehenden Ansprüche, **gekennzeichnet durch** mindestens ein Befestigungselement (8-11) an dem Fahrzeugkoffer (2) zur formschlüssigen Verbindung mit einem komplementären Befestigungselement (3-6) an dem Fahrzeug (1), wobei das Befestigungselement (8-11) an dem Fahrzeugkoffer (2) einen Einführtrichter (21) aufweist, um die Relativpositionierung der beiden komplementären Befestigungselemente (3-6) zu erleichtern.

10. Fahrzeug (1), insbesondere Omnibus (1), mit einem Fahrzeugkoffer (2) nach einem der vorhergehenden Ansprüche, wobei der Fahrzeugkoffer (2) an einer Außenseite des Fahrzeugs (1) montiert ist, insbesondere am Heck des Omnibusses (1).

11. Verfahren zur Montage und/oder Demontage eines Fahrzeugkoffers (2) an einer Außenseite eines Fahrzeugs (1), insbesondere an einem Heck eines Omnibusses (1), mit den folgenden Schritten:
a) Anheben des Fahrzeugkoffers (2) von einem Untergrund (13) in eine Montagehöhe und Montieren des angehobenen Fahrzeugkoffers (2) an einer Aufhängung an der Außenseite des Fahrzeugs (1), und/oder
b) Lösen des Fahrzeugkoffers (2) von der Aufhängung an der Außenseite des Fahrzeugs (1) und Absenken des Fahrzeugkoffers (2) von der Montagehöhe auf den Untergrund (13),
c) wobei der Fahrzeugkoffer (2) mittels einer in den Fahrzeugkoffer (2) integrierten Hubeinrichtung (16) maschinell angehoben und/oder abgesenkt wird,
**dadurch gekennzeichnet,**
d) dass die Hubeinrichtung (7, 16) mindestens einen pneumatischen Antriebszylinder (16) aufweist, und
e) dass der Antriebszylinder (16) einen Druckluftanschluss aufweist, der mit einem Druckluftanschluss des Fahrzeugs (1) gekoppelt wird.

## Claims

1. Vehicle storage case (2) for external assembly on a vehicle (1), in particular for external assembly at a rear end of a bus (1), having
a) a lifting device (16) for raising the vehicle storage case (2) for the external assembly of the vehicle storage case (2) on the vehicle (1) and/or for lowering the vehicle storage case (2) in the context of the disassembly of the vehicle storage case (2) from the vehicle (1), wherein the lifting device (16) is integrated in the vehicle storage case (2),
**characterized in that**
b) the lifting device (7, 16) has at least one pneumatic drive cylinder (16), and
c) **in that** the drive cylinder (16) has a compressed air connection, which can be coupled to a compressed air connection of the vehicle (1).

2. Vehicle storage case (2) according to Claim 1, **characterized in that**
a) the lifting device (7, 16) has an assembly retention member (7) which in the assembled state is mounted on a corresponding suspension (3-6) at the outer side of the vehicle (1),
b) **in that** the assembly retention member (7) can be deployed upwards relative to the vehicle storage case (2) and can be retracted downwards,
c) **in that** the lifting device (7, 16) retracts the assembly retention member (7) in a downward direction relative to the vehicle storage case (2) in order to raise the vehicle storage case (2), and
d) **in that** the lifting device (16) deploys the assembly retention member (7) in an upward direction relative to the vehicle storage case (2) in order to lower the vehicle storage case (2).

3. Vehicle storage case (2) according to Claim 1, **characterized by** a stand (12) in order to position the vehicle storage case (2) on a substrate (13), the stand (12) being securely fitted to the vehicle storage case (2) and not permitting any raising of the vehicle storage case (2).

4. Vehicle storage case according to Claim 1, **characterized in that**
a) the lifting device has a stand in order to position the vehicle storage case on a substrate,
b) **in that** the stand can be deployed in a downward direction and can be retracted in an upward direction relative to the vehicle storage case,
c) **in that** the lifting device deploys the stand downwards relative to the vehicle storage case in order to raise the vehicle storage case, whilst the stand is supported on the substrate and raises the vehicle storage case, and
d) **in that** the lifting device retracts the stand in an upward direction relative to the vehicle storage case in order to lower the vehicle storage case, whilst the stand is supported on the substrate.

5. Vehicle storage case according to Claim 4, **characterized by** an assembly retention member which in the assembled state is assembled on a corresponding suspension at the outer side of the vehicle, the assembly retention member being securely fitted to the vehicle storage case and not being able to be deployed.

6. Vehicle storage case (2) according to any one of the preceding claims, **characterized in that**
a) the drive cylinder (16) is arranged inside the vehicle storage case (2), in particular for retracting and deploying the stand, or
b) **in that** the drive cylinder (16) is fitted to the outer side of the vehicle storage case (2), in particular for retracting and deploying the assembly retention member (7).

7. Vehicle storage case (2) according to any one of Claims 3 to 6,
**characterized in that**
a) the stand (12) has at least three rollers (12) in order to position and move the vehicle storage case (2) on the substrate (13) so as to prevent tilting and to be movable, and/or
b) **in that** the rollers (12) of the stand can be pivoted about the vertical.

8. Vehicle storage case (2) according to Claim 7, **characterized in that**
a) the rollers (12) are arranged at the lower side of the vehicle storage case (2) in at least one roller storage compartment (14), and/or
b) **in that** the rollers (12) can be selectively retracted into the roller storage compartment (14) or deployed from the roller storage compartment (14), and/or
c) **in that** the roller storage compartment (14) can be closed by means of a closure (15), in particular by means of a roller shutter closure or a sliding closure system.

9. Vehicle storage case (2) according to any one of the preceding claims, **characterized by** at least one securing element (8-11) on the vehicle storage case (2) for positive-locking connection to a complementary securing element (3-6) on the vehicle (1), the securing element (8-11) having an insertion funnel-like member (21) on the vehicle storage case (2) in order to facilitate the relative positioning of the two complementary securing elements (3-6).

10. Vehicle (1), in particular bus (1), having a vehicle storage case (2) according to any one of the preceding claims, the vehicle storage case (2) being assembled at an outer side of the vehicle (1), in particular at the rear end of the bus (1).

11. Method for assembling and/or disassembling a vehicle storage case (2) at an outer side of a vehicle (1), in particular at a rear end of a bus (1), having the following steps:
a) raising the vehicle storage case (2) from a substrate (13) into an assembly height and assembling the raised vehicle storage case (2) on a suspension at the outer side of the vehicle (1), and/or
b) releasing the vehicle storage case (2) from the suspension at the outer side of the vehicle (1) and lowering the vehicle storage case (2) from the assembly height onto the substrate (13),
c) wherein the vehicle storage case (2) is mechanically raised and/or lowered by means of a lifting device (16) integrated in the vehicle storage case (2),
**characterized in that**
d) the lifting device (7, 16) has at least one pneumatic drive cylinder (16), and
e) **in that** the drive cylinder (16) has a compressed air connection, which is coupled to a compressed air connection of the vehicle (1).

## Revendications

1. Coffre de véhicule (2) pour le montage extérieur sur un véhicule (1), en particulier pour le montage extérieur à l'arrière d'un omnibus (1), comprenant
a) un système de levage (16) pour soulever le coffre de véhicule (2) pour le montage extérieur du coffre de véhicule (2) sur le véhicule (1) et/ou pour descendre le coffre de véhicule (2) dans le cadre du démontage du coffre de véhicule (2) du véhicule (1), le système de levage (16) étant intégré dans le coffre de véhicule (2),
**caractérisé en ce que**
b) le système de levage (7, 16) présente au moins un vérin d'entraînement pneumatique (16), et
c) le vérin d'entraînement (16) présente un raccord d'air comprimé qui peut être accouplé à un raccord d'air comprimé du véhicule (1).

2. Coffre de véhicule (2) selon la revendication 1, **caractérisé en ce que**
a) le système de levage (7, 16) présente une fixation de montage (7) qui, dans l'état monté, est montée sur une fixation correspondante (3-6) sur le côté extérieur du véhicule (1),
b) la fixation de montage (7) peut être sortie vers le haut et rentrée vers le bas par rapport au coffre de véhicule (2),
c) le système de levage (7, 16) fait rentrer la fixation de montage (7) vers le bas par rapport au coffre de véhicule (2) pour soulever le coffre de véhicule (2), et
d) le système de levage (16) fait sortir vers le haut la fixation de montage (7) par rapport au coffre de véhicule (2) pour abaisser le coffre de véhicule (2).

3. Coffre de véhicule (2) selon la revendication 1, **caractérisé par** un support (12) pour déposer le coffre de véhicule (2) sur un subjectile (13), le support (12) étant monté fixement sur le coffre de véhicule (2) et ne permettant pas un soulèvement du coffre de véhicule (2).

4. Coffre de véhicule selon la revendication 1, **caractérisé en ce que**
a) le système de levage présente un support pour déposer le coffre de véhicule sur un subjectile,
b) le support peut être sorti vers le bas et peut être rentré vers le haut, par rapport au coffre de véhicule,
c) le système de levage fait sortir le support vers le bas par rapport au coffre de véhicule pour soulever le coffre de véhicule, tandis que le support s'appuie sur le subjectile et soulève le coffre de véhicule, et
d) le système de levage fait rentrer le support vers le haut par rapport au coffre de véhicule pour abaisser le coffre de véhicule tandis que le support s'appuie sur le subjectile.

5. Coffre de véhicule selon la revendication 4, **caractérisé par** une fixation de montage qui, dans l'état monté, est montée sur une fixation correspondante au niveau du côté extérieur du véhicule, la fixation de montage étant montée fixement sur le coffre de véhicule et ne pouvant pas être sortie.

6. Coffre de véhicule (2) selon l'une quelconque des revendications précédentes, **caractérisé en ce que**
a) le vérin d'entraînement (16) est disposé à l'intérieur du coffre de véhicule (2), en particulier pour faire rentrer et sortir le support, ou
b) le vérin d'entraînement (16) est monté sur le côté extérieur du coffre de véhicule (2), en particulier pour faire rentrer et sortir la fixation de montage (7).

7. Coffre de véhicule (2) selon l'une quelconque des revendications 3 à 6,
**caractérisé en ce que**
a) le support (12) présente au moins trois roulettes (12) afin de déposer et de déplacer le coffre de véhicule (2) sur le subjectile (13) de manière protégée contre le basculement et de manière déplaçable et/ou
b) les roulettes (12) du support peuvent pivoter autour de la verticale.

8. Coffre de véhicule (2) selon la revendication 7, **caractérisé en ce que**
a) les roulettes (12) sont disposées sur le côté inférieur du coffre de véhicule (2) dans au moins un compartiment de rangement de roulettes (14), et/ou
b) les roulettes (12) peuvent au choix être rentrées dans le compartiment de rangement de roulettes (14) ou être ressorties du compartiment de rangement de roulettes (14), et/ou
c) le compartiment de rangement de roulettes (14) peut être fermé par une fermeture (15), en particulier par une fermeture à volet roulant ou par une fermeture coulissante.

9. Coffre de véhicule (2) selon l'une quelconque des revendications précédentes, **caractérisé par** au moins un élément de fixation (8-11) sur le coffre de véhicule (2) pour la connexion par engagement par correspondance de formes avec un élément de fixation complémentaire (3-6) sur le véhicule (1), l'élément de fixation (8-11) présentant sur le coffre de véhicule (2) un entonnoir d'insertion (21) afin de faciliter le positionnement relatif des deux éléments de fixation complémentaires (3-6).

10. Véhicule (1), en particulier omnibus (1), comprenant un coffre de véhicule (2) selon l'une quelconque des revendications précédentes, le coffre de véhicule (2) étant monté sur un côté extérieur du véhicule (1), en particulier à l'arrière de l'omnibus (1).

11. Procédé de montage et/ou de démontage d'un coffre de véhicule (2) sur un côté extérieur d'un véhicule (1), en particulier à l'arrière d'un omnibus (1), comprenant les étapes suivantes :
a) soulèvement du coffre de véhicule (2) depuis un subjectile (13) à une hauteur de montage et montage du coffre de véhicule soulevé (2) sur une fixation au niveau du côté extérieur du véhicule (1), et/ou
b) décrochage du coffre de véhicule (2) de la fixation au niveau du côté extérieur du véhicule (1) et abaissement du coffre de véhicule (2) depuis la hauteur de montage sur le subjectile (13),
c) le coffre de véhicule (2) pouvant être soulevé et/ou abaissé par machine au moyen d'un système de levage (16) intégré dans le coffre de véhicule (2),
**caractérisé en ce que**
d) le système de levage (7, 16) présente au moins un vérin d'entraînement pneumatique (16), et
e) le vérin d'entraînement (16) présente un raccord d'air comprimé qui est accouplé à un raccord d'air comprimé du véhicule (1).
